# EUROPEAN PATENT APPLICATION

(11) **EP 1 992 447 A1**
(43) Date of publication of application: **19.11.2008**
(21) Application number: 08156201.9
(22) Date of filing: 14.05.2008
(51) Int. Cl.: B23Q 1/66

(54) **Unit for automatically feeding workpieces to a manufacturing machine**

(30) Priority: 15.05.2007 IT TO20070337
(71) Applicant: FCS System s.r.l., 31032 Casale sul Sile (TV) (IT)
(72) Inventor: Canuto, Almerino, 31032 Casale sul Sile (IT)
(74) Representative: Jorio, Paolo

(57) **Abstract**

Unit (1; 33) for automatically feeding workpieces to a manufacturing machine, the unit (1) being provided with at least a first platform (3) to support a pallet (2) supporting a respective said workpiece; a transfer trolley (10) to transfer the pallet (2) between the first platform (3) and a second platform (4) consisting of a workpiece-carrying platform of the manufacturing machine; and a hoisting device (26) suitable to engage the pallet (2) to couple it to and uncouple it from the transfer trolley (10) in correspondence with the first and the second platform (3, 4).

## Description

The present invention relates to a unit for automatically feeding workpieces to a manufacturing machine, in particular a machine tool.

The present invention is advantageously intended, for example, for use in automatically feeding workpieces to a numerically controlled machine tool, to which the following description specifically refers but without any loss of generality.

Generally in the prior art, especially in the case of a numerically controlled machine tool for heavy duty applications, workpieces, sometimes weighing several hundreds of kilos, are fed preassembled and anchored to pallets, which constitute actual moveable workpiece-carrying platforms fixed directly to a work top of the machine tool.

Transferring the pallets to and from the machine tool clearly involves relatively long slack times, which considerably reduce the productivity of said machine tool.

The purpose of the present invention is to provide a unit for automatically feeding workpieces to a manufacturing machine, especially, but not exclusively a numerically controlled machine tool, said unit being simple and inexpensive to implement and, at the same time, making it possible to achieve a drastic reduction in the slack times caused by assembling, loading and unloading the workpieces.

According to the present invention a unit is provided for automatically feeding workpieces to a manufacturing machine according to that indicated in claim 1 and, preferably, in any one of the claims depending directly or indirectly on claim 1.

The present invention will now be described with reference to the attached drawings, illustrating some non-limiting embodiments thereof, in which:
- figures 1 and 2 are schematic plan views of a preferred embodiment of the feeding unit according to the present invention in two different operating positions;

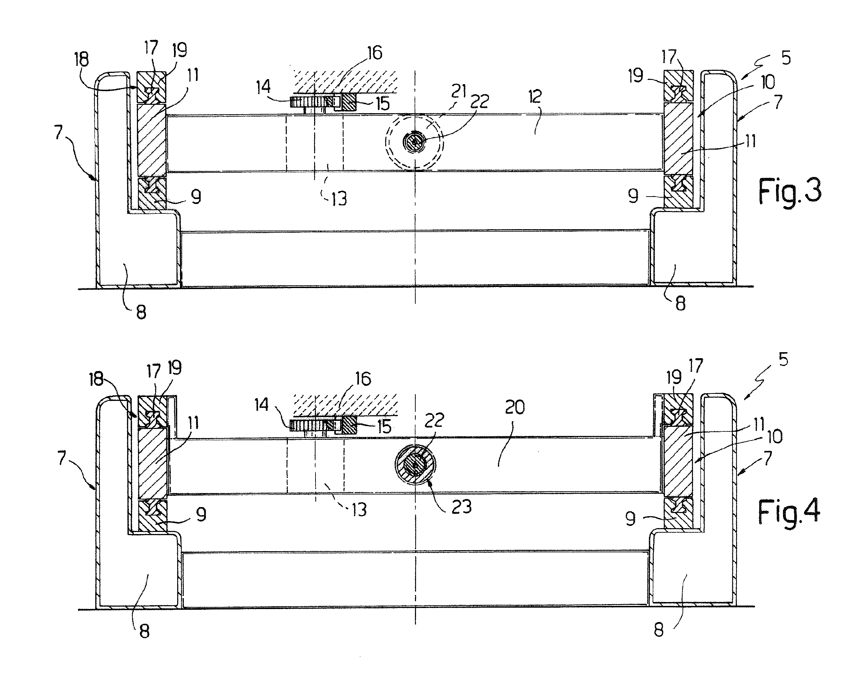

- figures 3 and 4 are cross-sections along the line III-III and, respectively, the line IV-IV of figure 1;
- figures 5 to 10 show the Figure 1 feeding unit in a longitudinal cross-section and in a sequence of respective operating configurations;
- figure 11 shows a perspective view of a further preferred embodiment of the feeding unit according to the present invention; and
- figure 12 shows a perspective view on an enlarged scale, with parts removed for the sake of clarity, of a detail of Figure 11.

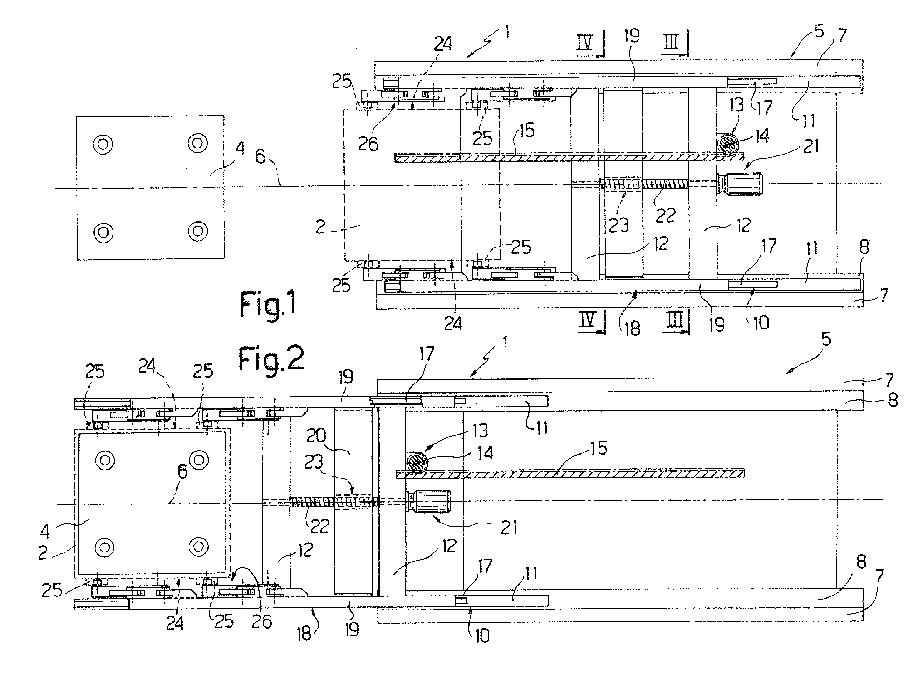

In Figures 1 and 2, number 1 indicates as a whole a feeding unit for transferring a workpiece-carrying platform or pallet 2, suitable to support one or more workpieces (not illustrated) mounted on said pallet 2 according to a predefined arrangement, from an infeed and forming platform 3 to a workpiece-carrying platform 4 of a numerically controlled machine tool (not illustrated).

According to that better illustrated in the series of figures from 1 to 4, the unit 1 comprises a fixed frame 5 having a horizontal longitudinal axis 6 and defined by two lateral shoulders 7 which are rectilinear, horizontal and parallel to one another and to the longitudinal axis 6. Each lateral shoulder 7 has an L-shaped cross-section, one base 8 of which, facing towards the longitudinal axis 6 and the base 8 of the other lateral shoulder 7, supports a relative grooved rail 9 parallel to the longitudinal axis 6 and defining, with the other rail 9, a longitudinal slideway for a trolley 10, which is moveable on the frame 5 in a travelling direction parallel to the longitudinal axis 6.

The trolley 10 comprises two longitudinal members 11, each of which is slidingly coupled to a respective rail 9, and which are integrally joined to one another by two cross members 12, one of which supports a reversible gear-motor 13 which is provided with an output shaft, arranged vertically, to which a pinion 14 meshing with a rack 15 is keyed. The rack 15 extends parallel to the longitudinal axis 6, is supported in a fixed position by an upper cross member 16 of the frame 5 and, by cooperating with the pinion 14, allows the trolley 10 to move in the two directions along the rails 9.

Each longitudinal member 11 is superiorly connected to a relative rail 17 parallel to the longitudinal axis 6 and defining, with the other rail 17, a longitudinal slideway for a further trolley 18, which comprises two grooved rods 19, each of which is slidingly coupled to the relative rail 17 and integrally connected to the other grooved rod 19 by means of a cross member 20 arranged between the cross members 12. The movement in the two directions of the trolley 18 on the trolley 10 in a direction parallel to the travelling direction of the trolley 10 and to the longitudinal axis 6 is ensured by a gear-motor 21, which is mounted on the trolley 10 and is provided with an output shaft to which a screw 22 is integrally connected, said screw 22 being parallel to the longitudinal axis 6, supported in a rotatingly and axially fixed manner by the cross members 12 and coupled to the cross member 20 by means of a screw-nut screw coupling 23.

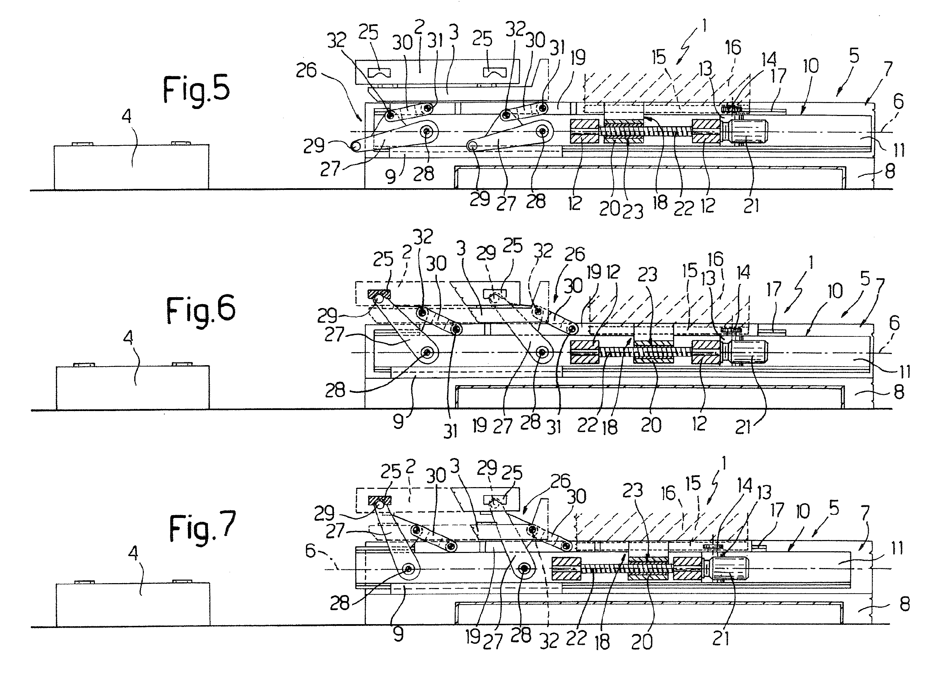

According to that better illustrated in figures 5 to 10, the platform 3 is integral with the cross member 16, is supported by the frame 5 in a fixed position above the trolley 17 and between the grooved rods 18, and is suitable to support a pallet 2 the plan of which is essentially rectangular in shape. In particular, the width of the pallet 2, measured between two opposite edges 24 thereof, is greater than that of the platform 3 and less than the distance between the longitudinal members 11 and the rods 19, and said pallet 2 is provided, along each edge 24, with two handles 25 which are essentially C-shaped with their concavity facing downwards; thus the pallet 2 when placed on the platform 3 with its edges 24 arranged parallel to the longitudinal axis 6, projects laterally from the platform 3, and its handles 25 are arranged inside the space between the grooved rods 18.

According to that better described in figures 5 to 10, the unit 1 comprises a hoisting device 26 suitable to engage the handles 25 of a pallet 2 to lift the pallet 2 when it is arranged on the platform 3 or on the platform 4, support the pallet 2 during its movement between the platforms 3 and 4 following a movement of the trolley 10 along the rails 9, and deposit the pallet 2 on the platform 4 or 3 at the end of said movement.

The hoisting device 26 comprises, for each longitudinal member 11, a pair of cranks 27 which are mounted on the inside surface of said longitudinal member 11 to rotate about respective pins 28 attached to the longitudinal member 11, arranged transversely to the longitudinal axis 6 and at a distance from one another, measured parallel to the longitudinal axis 6, that is equal to the distance between the handles 25 arranged along a same edge 24 of a relative pallet 2. Connected to the free end of each crank 27 is a pin 29, which is parallel to the relative pin 28, faces the longitudinal axis 6, is arranged at a distance from the relative pin 28 which is greater than the distance between each handle 25 of a pallet 2 arranged on the platform 3 and the level at which the relative pin 28 is arranged, and is, therefore, suitable to transversely engage the recess of a relative handle 25 of a pallet 2 arranged on the platform 3.

The angular position of each crank 27 about the relative pin 28 is controlled by a respective connecting rod 30, which is arranged between the relative crank 27 and the upper cross member 16, and pivots at one end about a relative pin 31 parallel to the relative pin 28 and integral with the relative grooved rod 19, and at the other end about a relative pin 32 parallel to the relative pin 28 and extending towards the longitudinal axis 6 from an appendix projecting from an intermediate portion of the relative crank 27 towards the upper cross member 16.

The dimensions of the appendix bearing the pin 29 are such to allow the relative crank 27 to rotate about the relative pin 28 starting from an initial position (figure 5) in which said crank 27 is arranged in an essentially horizontal position, and the relative pin 29 is arranged at a level below that at which the handles 25 of a pallet 2 supported by the platform 4 are arranged. Moreover, the pins 31 of each grooved rod 19 are also arranged at a distance from one another equal to the distance between the handles 25 arranged along a same edge 24 of a relative pallet 2.

In the following description, terms such as "front", "back", "forward" "backward" are used for the sake of simplicity. Said terms should be interpreted bearing in mind that, for the author, the platform 4 is arranged "in front of" or "anteriorly" with respect to the unit 1, and a movement towards the platform 4 is a "forward" movement.

From the above description it is apparent that, if the cranks 27 are facing forwards with respect to the respective pins 28 and are arranged in the initial position of figure 5, and the trolley 10 is kept still in the position of figure 5, in which each handle 25 of a pallet 2 arranged on the platform 3 is in a position along the circular path of the pin 29 about the relative pin 28 held in a fixed position by the trolley 10, a backward movement (figure 6) of the trolley 18 causes the cranks 27 to turn upwards and the pins 29 to move back until a meshing position (figure 6) is reached, in which each pin 29 engages the relative handle 25.

If, starting from the meshing position, the backward movement of the trolley 18 continues, but is essentially compensated for by a forward movement of the trolley 10, the backward movement of the pins 29 stops and the rotation of the cranks 27 causes the pins 29 to move up (figure 7) subsequently lifting the pallet 2 from the platform 3.

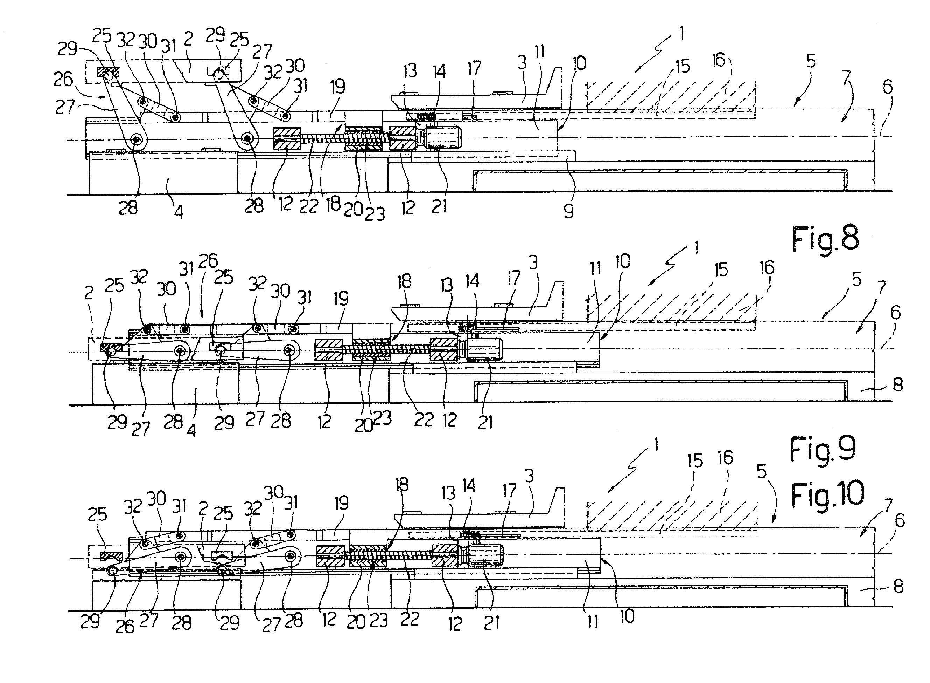

If, at this stage, the trolley 18 is blocked on the trolley 10, and the trolley 10 is moved forward (figure 8), the pallet 2 can be transferred from a position above the platform 3 to a position above the platform 4.

When the movements of the trolleys 10 and 18 that allowed the pallet 2 to be lifted from the platform 3 are performed in reverse, the pallet 2 can be placed (figure 8) and left (figure 9) on the platform 4.

All the lifting, carrying and lowering operations described above can be repeated to place the pallet 2 on the platform 3 again at the end of the machining process.

From the above description it is apparent that the part of the hoisting device 26 associated with each lateral shoulder 7 is essentially defined by an articulated parallelogram, in which the cranks are defined by the cranks 27 and the connecting rod is defined by the two connecting rods 30; and in which the inclination of the cranks, and thus the position of the pallet 2 when coupled to the cranks, is defined by the relative position of the trolleys 10 and 18 with respect to one another.

It is also clear that the unit 1 allows the pallets 2 to be transferred from the platform 3 to the platform 4 without the need for any particular modifications to the platform 4 of the machine tool, apart from the inclusion of an automatic system to block the pallet 2 at the top of the platform 4.

In other words the unit 1 can easily be coupled to an existing numerically controlled machine tool, without having to alter its structural or mechanical characteristics. At present, such interventions are systematically required, with all the inconveniences involved.

As a final point it is important to point out that the unit 1 can be used as a convenient and fast means of transferring a pallet 2 between a position (platform 3) in which said pallet 2 is equipped with the relative workpieces, and a working position (platform 4), although the use of the unit 1 alone can only marginally increase the productivity of the manufacturing machine (not illustrated) associated with said unit 1, since with a single unit 1 a pallet 2 cannot be equipped while another pallet 2 is arranged on the platform 4.

It is however clear that the slack times of the manufacturing machine can be reduced practically to zero by using two units 1 arranged, for example, but not necessarily, on opposite sides of the platform 4.

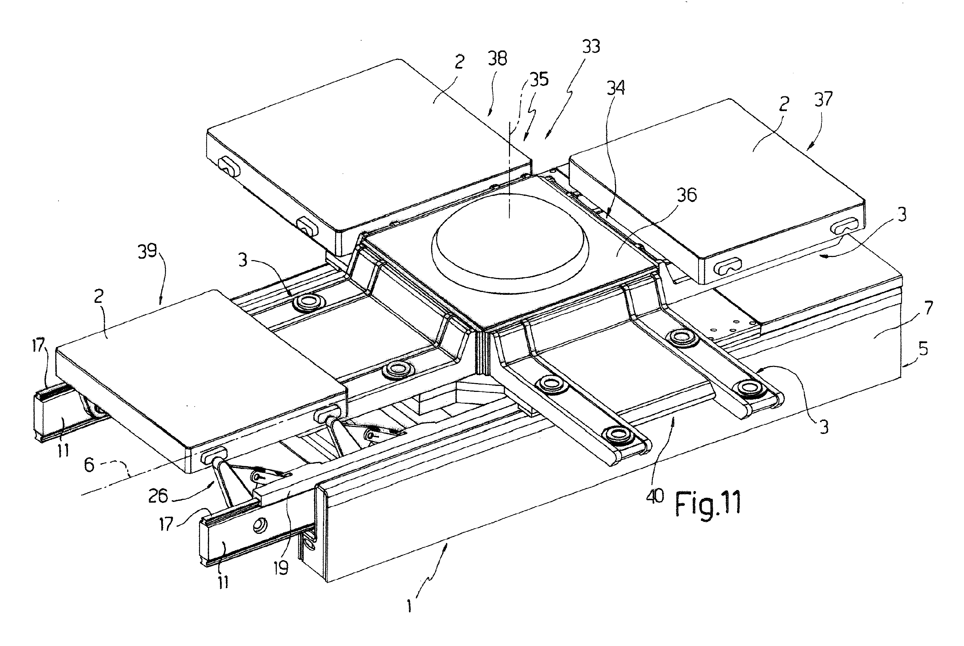

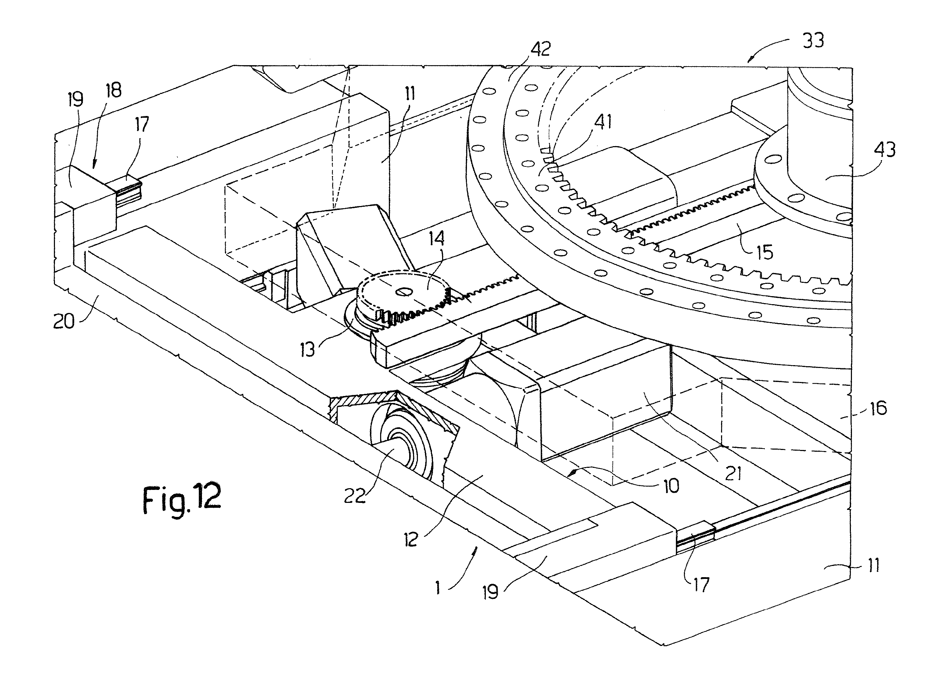

A result similar to that described above is obtained by using a unit 33, illustrated in figures 11 and 12, in which a single unit 1 is used and on which a turntable 34 is mounted on the upper cross member 16 (figure 11), said turntable being rotatable step-by-step (in an anti-clockwise direction in figure 11) about a vertical axis 35 and comprising a central body 36, from which platforms 3 project radially and in an evenly distributed manner about the axis 35.

In the example that is illustrated, there are four platforms 3 and these are moved step-by-step by the turntable 34 through a loading station 37 of a relative pallet 2; a work station 38, in which the workpieces (not illustrated) are arranged in previously defined positions on the relative pallet 2; a transfer station 39, aligned with the longitudinal axis 6, in which the pallet 2 is transferred to the platform 4 and, after machining, collected from the platform 4; and an unloading station 40.

The number of platforms 3 can clearly be other than four; in particular, even the use of just two platforms 3 arranged in diametrically opposite positions would make it possible to drastically reduce down times.

The turntable 34 is made to rotate about the axis 35 by means of a ring gear 41 coaxial to the axis 35, supported by the upper cross member 16 by means of a thrust bearing 42 and made to rotate by means of a pinion-ring gear transmission (not illustrated) driven by a central motor 43.

## Claims

1. Unit for automatically feeding workpieces to a manufacturing machine, the unit (1) comprising at least a first platform (3) to support a pallet (2) for supporting a respective said workpiece; transfer means (10) to transfer the pallet (2), in a given transfer direction, between the first platform (3) and a second platform (4) consisting of a workpiece-carrying platform of the manufacturing machine; and hoisting means (26) suitable to engage the pallet (2) to couple it to and uncouple it from the transfer means (10) in correspondence with the first and the second platform (3, 4).

2. Unit according to claim 1, and comprising a slideway (9), and wherein said transfer means (10) comprise a first trolley (10) moveable along the slideway (9) and supporting the hoisting means (26).

3. Unit according to claim 2, wherein the first trolley (10) is a motor-powered trolley.

4. Unit according to claim 3, and comprising a first motor (13) mounted on the first trolley (10), a fixed rack (15) parallel to the slideway (9); and a pinion (14) driven by the first motor (13) and coupled to the rack (15).

5. Unit according to one of the claims from 2 to 4, wherein said slideway (9) extends above the second platform (4).

6. Unit according to one of the claims from 2 to 5, wherein said slideway (9) extends below the first platform (3).

7. Unit according to any one of the claims from 2 to 6, wherein the hoisting means (26) consist of quadrilateral articulated hoisting means (26), and comprise cranks (27) pivotally connected to the first trolley (10) to rotate with respect to said first trolley (10) about respective first pins (28) arranged transversely with respect to the slideway (9), and control means (18, 30) to control the inclination of the cranks (27) with respect to the first trolley (10); the cranks (27) being suitable to engage the pallet (2) to support it on the first trolley (10).

8. Unit according to claims 6 and 7, wherein the length of the cranks (27) is greater than a distance between the first trolley (10) and the first platform (3).

9. Unit according to claim 7 or 8, wherein the control means (18, 30) comprise a second trolley (18) supported by the first trolley (10) and moveable along said first trolley (10) parallel to said slideway (9); and articulated means (30) to connect the second trolley (18) to said cranks (27).

10. Unit according to claim 9, wherein the articulated connecting means (30) comprise, for each crank (27), a connecting rod (30) interposed between the second trolley (18) and an intermediate point of said crank (27).

11. Unit according to claim 10, wherein the first trolley (10) comprises two longitudinal members (11), and the second trolley (18) comprises two rods (19), each of which is slidingly coupled to a relative longitudinal member (11); there being connected to each longitudinal member (11) a respective pair of said cranks (27); and there being connected to each rod (19) a respective pair of said connecting rods (30).

12. Unit according to one of the claims from 7 to 11, wherein each crank (27) has, at its free end, a second pin (29) suitable to engage a relative handle (25) of the pallet (2).

13. Unit according to one of the claims from 9 to 12, wherein the second trolley (18) is a motor-powered trolley.

14. Unit according to claim 13, and comprising a second motor (21) supported by the first trolley (10); and a screw (22) parallel to said slideway (9), driven by the second motor (21) and coupled to the second trolley (18) by means of a screw-nut screw coupling (23).

15. Unit according to one of the previous claims and comprising a plurality of said first platforms (3) and a turntable (34), which is rotatable step-by-step about an axis (35) that is vertical and transversal with respect to said transfer direction, supports said first platforms (3) in positions that are evenly distributed about said axis (35), and is suitable to stop said first platforms (3) in sequence in a transfer position aligned with said transfer direction.
